Europäisches Patentamt

European Patent Office

Office européen des brevets

(11) Publication number: **0 173 651**
**A1**

## (12) EUROPEAN PATENT APPLICATION

(21) Application number: **85830174.0**

(22) Date of filing: **08.07.85**

(51) Int. Cl.⁴: **A 47 J 43/12,** A 01 J 13/00,
A 47 J 31/40

(30) Priority: **11.07.84 CH 3349/84**

(43) Date of publication of application: **05.03.86**
**Bulletin 86/10**

(84) Designated Contracting States: **AT BE CH DE FR GB IT
LI LU NL SE**

(71) Applicant: **Nuova Faema S.p.A., 15, via Ventura,
I-20134 Milan (IT)**

(72) Inventor: **Kaeufeler, Max, Via Ronchetto 5,
CH-6814 Cadempino (CH)**

(74) Representative: **De Nova, Roberto et al, c/o
Jacobacci-Casetta & Perani S.p.A. Via Visconti di
Modrone 7, I-20122 Milano (IT)**

(54) A device for producing a hot milk cream from cold milk.

(57) A device for producing hot milk cream from cold milk
comprising a chamber (28) whereinto a given volume of cold
milk is supplied through at least one metering device (25, 26,
27); means (32, 2) for reducing the volume of said chamber
by causing the cream produced in the chamber to overflow
gradually; evaporating means (30) for delivering steam to
selected locations of the milk contained in the chamber;
means (16, 3) adapted to shift, relatively to the milk contained
in the chamber, said evaporating means (30) across different
zones or layers of the milk; means (40) adapted to automatic-
ally wipe the chamber walls clean.

## A DEVICE FOR PRODUCING A HOT MILK CREAM FROM COLD MILK

This invention relates to a device for producing, starting from a vessel of cold milk and by heating with steam, a cream of milk and heavy milk cream for serving, in particular, in cups over Italian "espresso" coffee to provide the well-known "cappuccino". It also lends itself to applying a hot milk cream over other hot and cold drinks, and over various types of icecream to make them tastier.

It is known that current machines for making Italian "espresso" coffee are equipped with a steam injecting pipe connected at one of its ends to a steam generating tank (boiler) and ending at the other end in a small drilled head; a cut-off member (cock) is provided between these two elements.

Through this known arrangement, the bartender can obtain a hot milk cream for "cappuccino" making through the following steps:

he puts into a vessel a given amount of milk (which amount would be usually larger than that required for the number of cappuccino cups to be prepared);

after opening the cock manually, he takes the milk-containing vessel under the steam injecting head, and reciprocates manually the vessel up and down, in conformity with a special technique so that the steam can flow out of the injection head

- 1 -

0173651

and heat alternately the top and bottom layers of the milk in the vessel.

It is recognized that this procedure requires great skill and the availability of skilled and experienced personnel, since the various types of milk, owing to their different proportions of fats and treatments undergone, behave differently and often defeat even the efforts of a good operator.

Infact, the milk, unless subjected to these movements in the proper way, may "cook", as the experts say, thereby the cream can no longer be formed.

After producing the aforesaid light cream, with the procedure just described, the operator, through the application of just as much skill, imparts to the milk vessel, which now ·contains light cream floating at the surface, appropriate oscillatory movements to transfer, into a cup containing espresso coffee or another drink, in addition to the hot milk also the light cream formed at its surface.

It is recognized that this operation requires some skill, to be acquired only by long practice, because it often happens that even skilled personnel can only transfer milk and not the cream, and sometimes this difficulty is obviated with the aid of a small paddle or spoon.

It will be apparent, therefore, that this operation is somewhat complicated, requires a

0173651

degree of skill, and is frequently only partly successful; it is not unfrequent, for the cream to collapse entirely and leave but milk.

Simpler methods of producing such milk cream have been known for some time which consists of providing an apparatus, possibly in combination with machines for making "moka" type coffee, effective to introduce a steam injector through the top of the coffee pot. The injected steam heats the milk, as poured manually into a vessel also containing coffee or else, and applies heat to the contents to provide a very mediocre result, given that the steam injector does not move during the heating operation to reach at different times the various regions of the liquid in a preset sequence, and the milk is heated together with the coffee, or coffee is poured over the milk and not vice versa.

It is the object of this invention to provide a device which can automate the three operative steps described above, to afford the great advantage that the milk cream can be produced automatically.

Another great advantage is that, once the cycle (time durations of the injector immersion to various depths in the milk body) has been set, the same cycle is retained through subsequent operations, thereby providing unfailingly a very pleasant milk cream.

In addition to the above, the even more important advantage is afforded that the results

- 3 -

sought can be obtained without the operator being required to master that art, and possess that skill and expertize which are necessary to achieve like results through manual operations.

It is apparent that this prevents milk from being wasted and affords, therefore, considerable savings in raw material, in addition to the savings in skilled labor already discussed hereinabove.

The device of this invention is characterized by:

at least one chamber into which a given volume of cold milk is fed through at least one metering arrangement;

means for decreasing the volume of said chamber, to cause the cream produced in the chamber to overflow;

vaporizing means effective to deliver steam to selected locations through the milk contained in the chamber and over selected and varying time periods;

means operative to shift, relatively to the milk contained in the chamber, said vaporizing means across different zones or layers of the milk contained in said chamber; and

means for automatically cleaning the chamber walls.

The accompanying drawing shows by way of illustration a preferred embodiment of this device, which embodiment should not be construed to be

- 4 -

limitative or binding of this invention.

Figure 1 shows it diagramatically in all its component parts.

Figure 2 is an enlarged scale axial section view of the device chamber, in a modified embodiment thereof.

This device comprises a slanted chamber 28 into which a given volume of cold milk picked up from the reservoir 23 is fed through the metering device 25, 26 and 27.

·The volume of the chamber 28 can be decreased by any such expedients as shifting one wall, or better still, given that in this case the chamber is cylindrical, shifting the piston 32 upwards. Thus, the milk cream produced at the surface is caused to overflow into the cup 27'.

The piston 32 is shifted by means of the first cam 2.

Located within the chamber 28 is the evaporator head 30 whereto steam is supplied by the boiler 5.

The head 30 can be moved to various levels in the chamber 28 by means of the second cam 3, so as to heat different layers of the milk contained in the chamber 28, thus reproducing the technique used by a skilled bartender.

Operation is as follows:

On depressing a pushbutton, the gear motor is started and the camshaft with its axis at 1 begins to rotate slowly.

The cam 2 turns and the pistons 32, which was at the start at its top position, moves down to its bottom position.

Concurrently with the cam 2, also the cam 4 turns, thus allowing the rod 19 to move downwards.

This causes the rocker arm 20 to pivot around the pin 21. The rod 22, connected to the rocker arm 20, moves up and opens the valve 27 of the metering device 26, while holding the valve 25 shut; the milk contained in the small hollow cylinder 26 of set volume flows out the valve 27, and through the underlying open channel, collects into the slanted chamber or cylinder 28.

Now, the rod 22 is again lowered to first close the valve 27 and then open the valve 25, thus allowing the milk 24 contained in the main reservoir 23 to fill the small hollow cylinder 26 of the metering device.

In its rotary movement, the camshaft rotates the second cam 3 which drives the rod 16, which causes the injector holder tube 29 to oscillate around its swivel connection 18. and position the steam injector 30 first at the top layer of the milk contained in the slanted cylinder 28 and then at the bottom one, depending on how the cam is arranged.

Another cam, located on the same camshaft with its axis at 1, causes a valve to open, thus enabling the steam generated in the boiler 5 to flow through the pipe 11 and out of the holes formed in the head of the injector 30, thus vaporizing the various layers of the milk 31.

In the meantime, milk cream forms at the surface.

The valve 17 is now closed, cutting off the steam outflow, and the injector head 30 is raised to its topmost position.

The piston 32, again driven by the cam 2, is moved to its topmost position, thus reaching with its head the rim of the slanted cylinder 28 and causing all the milk and cream formed therein to overflow from the latter into the cup 27'. Thus, the cycle ends with the pistons at the most suitable position for wiping it clean, if required, with a towel or otherwise.

During the cycle, the valve 14 is also opened, as driven by another cam, and the hot water 6 reaches, through the conduit 15, at the terminating portion thereof made of an elastic material, the chamber 33 to wash the walls of the cylinder 28 and flow then out through a drain 34.

The apparatus may be completed with a sensor 13, effective to always keep the water in the boiler 5 at the same level by controlling the solenoid valve 9 to open and admit cold water from the water system into the boiler through the conduit 8.

The boiler temperature is regulated by a thermostat 10 controlling the heater element 7. The boiler would be also provided with a relief valve 12.

It is envisaged that:

the cold milk reservoir 23 may be readily drawn out, for daily washing, and provided at the outlet from the chamber 26, with open cross-section paths 39 for the milk, in order to prevent their clogging and facilitate their cleansing;

the pipe connected to the head 30 for steam injecting be imparted an automatic programmed movement ·to control the immersion of the head to different depths in the milk and for determined time durations;

the chamber 28, formed in this case of a cylinder with its axis set at an angle, may have a movable wall not limitatively comprising the bottom wall, so that the chamber volume can be reduced and the cream and milk be ejected by overflowing;

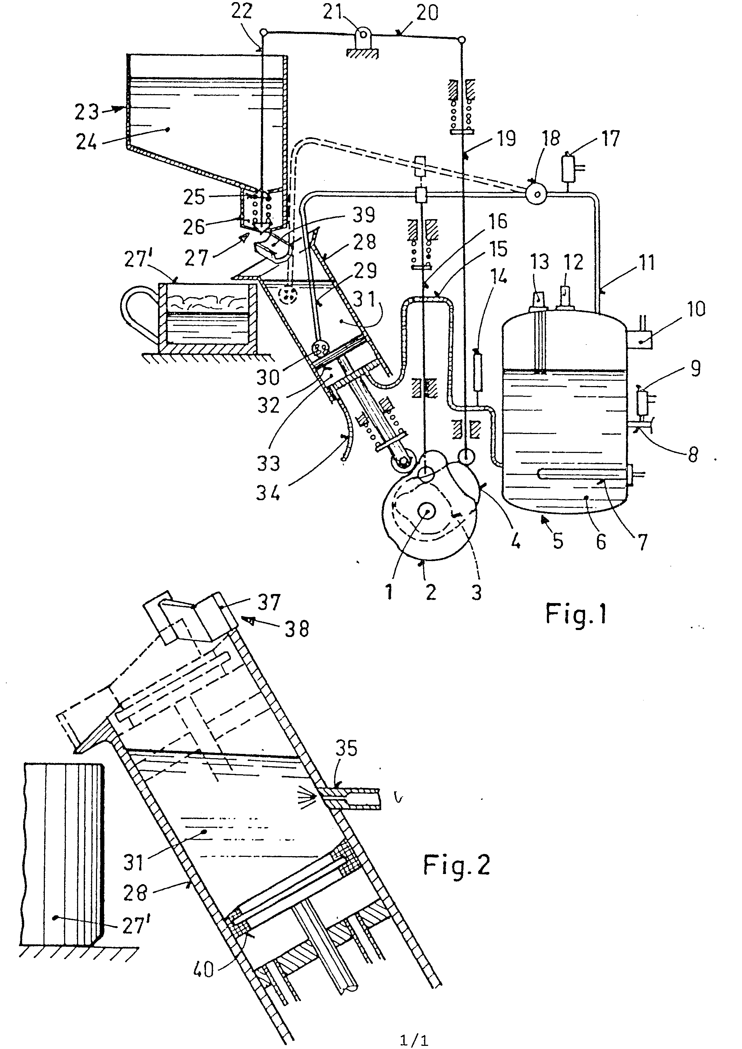

the chamber 28, as described hereinabove may be embodied to include a small hole 35 (Figure 2) through its cylindrical wall to allow the vaporizing steam therethrough, thereby the piston, in its up and down movements, can bring alternately the lowermost and uppermost layers of the milk at the hole for vaporization:

the chamber 28 be provided with a paddle 37 driven in the direction of the arrow 38, so as to push the denser creams adhering on the piston wall toward the cup 27'; and

the piston 32 be provided with a seal 40

- 8 -

of appropriate configuration and nonconstant cross-section along its circumference, i.e. tapering at one end, in order to favor the cream falling into the cup, and at the same time, with a surface, as far as feasible flat, continuous and free of interstices, with the piston at its top dead center, in order to promote easier and more effective cleaning, all this without departing from the protection scope of the patent.

0173651

## CLAIMS

1. A device for producing a hot milk cream from cold milk, characterized by:

at least one chamber (28) into which a given volume of cold milk is fed through at least one metering arrangement (25, 26, 27);

means (32,2) for decreasing the volume of said chamber (28) to cause the cream produced within the chamber to gradually overflow;

vaporizing means (30) effective to deliver steam to selected locations through the milk contained in the chamber and over selected and varying time periods;

means (16,3) operative to shift, relatively to the milk contained in the chamber, said vaporizing means (30) across different zones or layers of the milk contained in said chamber;

and means (40) for automatically cleaning the chamber walls.

2. A device according to Claim 1, characterized in that said chamber comprises a slanted cylindrical body (28) wherein a piston (32) driven by a first cam (2) is slidable to decrease the volume of said chamber; cold milk being introduced into said chamber (28) through a metering arrangement including a small hollow cylinder (26) located at the bottom of the main reservoir (23), being extractable for cleaning purposes and containing the cold milk, and a pair of opposedly operating valves driven by a second

- 1 -

cam (4); said valve pair comprising a milk intake valve (25) and milk exhaust valve (27) to/from said small hollow cylinder (26).

3. A device according to Claims 1 and 2, chracterized in that the milk intake conduit (39) is left open for easier cleaning thereof by means (40) operative to automatically wipe clean the walls of said chamber (28) and including a sealing strip (40) applied peripherally to the piston (32) and an auxiliary chamber (33) underlying the piston (32) whereinto hot flushing water is delivered, over conduits (15) and a valve (14), from the boiler (6) supplying the vaporizing means (30) with steam.

4. A device according to Claim 3, characterized in that said sealing strip (40) applied peripherally to the piston (32) has a tapering cross-sectional configuration toward the cream outlet from the chamber (28) to promote overflowing of said cream; the tightness of said sealing strip against the chamber walls and its configuration being such as to make cleaning easier with the piston located at its top dead center position.

5. A device according to Claim 1, characterized by mechanisms effective to shift the chamber relatively to the vaporizing means (30) held stationary.

6. A device according to Claim 1, characterized in that said chamber (28) has a fixed vaporizing nozzle (35) attached to the walls of said chamber, whereby the piston (32) in reciprocating up and down brings the various upper and lower layers of the milk within the chamber successively into alignment with said vaporizing nozzle.

7. A device according to Claim 1, characterized by a paddle (37) driven of reciprocating motion (38) and formed, if required, with holes wherefrom steam is exhausted to promote overflowing of the denser creams sticking to the piston (32).

8. A device according to Claim 1 to 7, characterized by means for its application both to automatic coffee-making machines for coffee house or home use, or as a separate device.

9. A machine according to Claim 1 to 8, characterized in that said chamber is provided with a means of causing the cream to overflow into one, two or more cups.

1/1

0173651

Fig.1

Fig.2

1/1

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | NL-C- 64 115 (PELLE) | | A 47 J 43/12<br>A 01 J 13/00<br>A 47 J 31/40 |
| A | US-A-2 116 541 (ROUSH et al.) | | |
| A | DE-C- 827 333 (BLANCH) | | |
| A | US-A-3 103 873 (BREITENSTEIN) | | |
| A | US-A-4 320 702 (SHEIN & NEELY) | | |

**TECHNICAL FIELDS SEARCHED (Int. Cl.4)**

A 47 J
A 01 J
B 01 F

The present search report has been drawn up for all claims

| Place of search<br>THE HAGUE | Date of completion of the search<br>03-12-1985 | Examiner<br>SCHARTZ J. |
|---|---|---|

EPO Form 1503 03.82